# EUROPÄISCHE PATENTSCHRIFT

(11) **EP 4 279 351 B1**
(45) Veröffentlichungstag und Bekanntmachung des Hinweises auf die Patenterteilung: **04.06.2025**
(21) Anmeldenummer: 23159636.2
(22) Anmeldetag: 02.03.2023
(51) Int. Cl.: B60W 30/16

(54) **VERFAHREN ZUR EINSTELLUNG EINER TEMPOMATFUNKTION MIT AUTOMATISCHER ABSTANDSEINSTELLUNG IN EINEM EINSPURFAHRZEUG**
METHOD FOR ADJUSTING A CRUISE CONTROL FUNCTION WITH AUTOMATIC DISTANCE ADJUSTMENT IN A SINGLE-TRACK VEHICLE
PROCÉDÉ DE RÉGLAGE D'UNE FONCTION DE RÉGULATION DE VITESSE AVEC RÉGLAGE AUTOMATIQUE DE DISTANCE DANS UN VÉHICULE À VOIE UNIQUE

(30) Priorität: 19.05.2022 DE 102022204994
(43) Veröffentlichungstag der Anmeldung: 22.11.2023
(73) Patentinhaber: Robert Bosch GmbH, 70442 Stuttgart (DE)
(72) Erfinder: Vetter, Daniel, Farmington Hills, 483313418 (US); Hellmann, Felix, 1030 Wien (AT); Schoenherr, Michael, 71272 Renningen-Malmsheim (DE)

(56) Entgegenhaltungen:
- DE-A1- 102019 200 209
- DE-A1- 102019 201 141
- DE-A1- 102019 205 881

## Beschreibung

Die Erfindung bezieht sich auf ein Verfahren zur Einstellung einer Tempomatfunktion mit automatischer Abstandseinstellung in einem Einspurfahrzeug.

### Stand der Technik

Bekannt sind Abstandstempomatfunktionen, mit deren Hilfe die aktuelle Fahrzeuggeschwindigkeit selbsttätig in Abhängigkeit des Abstandes zu einem vorausfahrenden Fahrzeug eingestellt wird. Hierbei kann der Fahrer eine Zielgeschwindigkeit im Abstandsregeltempomat einstellen, wobei die tatsächliche Fahrzeuggeschwindigkeit geringer sein kann und sich an der Geschwindigkeit des vorausfahrenden Fahrzeugs orientiert. Die Erfassung der Distanz zum vorausfahrenden Fahrzeug erfolgt üblicherweise mithilfe einer Radareinrichtung im Fahrzeug. Siehe z.B. DE 10 2019 200 209 A1 oder DE 10 2019 205 881 A1.

### Offenbarung der Erfindung

Das erfindungsgemäße Verfahren bezieht sich auf die Einstellung einer Tempomatfunktion mit automatischer Abstandseinstellung in einem Einspurfahrzeug. Bei dem Einspurfahrzeug handelt es sich insbesondere um ein motorgetriebenes Einspurfahrzeug, vorzugsweise um motorgetriebenes Zweirad wie ein Motorrad oder ein Motorroller. Bei aktivierter Tempomatfunktion wird die Geschwindigkeit des Einspurfahrzeugs selbsttätig auf eine Zielgeschwindigkeit eingestellt, wobei sowohl Beschleunigungsvorgänge als auch Bremsvorgänge selbsttätig durchgeführt werden. Aufgrund der Ausführung als Tempomatfunktion mit automatischer Abstandseinstellung kann die tatsächliche Geschwindigkeit in Abhängigkeit eines vorausfahrenden Fahrzeuges eingestellt werden, das mithilfe einer Abstandserkennungseinheit detektiert wird. Die tatsächliche Geschwindigkeit kann auf die Geschwindigkeit des vorausfahrenden Fahrzeuges angepasst werden, wobei das folgende Fahrzeug einen geschwindigkeitsabhängigen Abstand zum vorausfahrenden Fahrzeug einhält.

Das erfindungsgemäße Verfahren kann bei einer Gruppenfahrt von Einspurfahrzeugen eingesetzt werden. Bei aktivierter Tempomatfunktion mit vorgegebener Zielgeschwindigkeit wird zunächst mithilfe der Abstandserkennungseinheit der Seitenabstand zwischen zwei vorausfahrenden Einspurfahrzeugen ermittelt. Der Seitenabstand kennzeichnet die laterale Distanz quer zur Längsrichtung zwischen den beiden vorausfahrenden Einspurfahrzeugen.

In einem folgenden Verfahrensschritt wird ein Schwellenwert ermittelt, der sich als Funktion des zuvor bestimmten Seitenabstandes zwischen den zwei vorausfahrenden Einspurfahrzeugen berechnet. Danach wird der Seitenabstand zwischen dem eigenen Einspurfahrzeug (im Folgenden: Ego-Fahrzeug) und einem vorausfahrenden Einspurfahrzeug, insbesondere dem unmittelbar vorausfahrenden Einspurfahrzeug ermittelt.

Schließlich wird, in einem weiteren Verfahrensschritt, das, insbesondere unmittelbar, vorausfahrende Einspurfahrzeug als zu folgendem Zielfahrzeug für die Tempomatfunktion für den Fall verwendet, dass der Seitenabstand zwischen dem Ego-Fahrzeug und dem, insbesondere unmittelbar, vorausfahrenden Einspurfahrzeug kleiner oder gleich dem Schwellenwert ist.

Diese Vorgehensweise hat den Vorteil, dass selbsttätig von der Tempomatfunktion entschieden wird, ob es sich um eine Gruppenfahrt handelt und das Ego-Fahrzeug als Teil der Gruppe einem vorausfahrenden Einspurfahrzeug folgt. Die Entscheidung kann mit einer bereits bestehenden Hardware einer Tempomatfunktion mit automatischer Abstandseinstellung getroffen werden; es ist keine zusätzliche Hardware erforderlich. Sofern selbsttätig erkannt wird, dass es sich um eine Gruppenfahrt handelt, zu der auch das Ego-Fahrzeug gehört, folgt das Ego-Fahrzeug einem vorausfahrenden Einspurfahrzeug, das Teil der Gruppe ist. Ergibt dagegen die Auswertung, dass die genannten Bedingungen für eine Teilnahme des Ego-Fahrzeugs an der Gruppenfahrt nicht vorliegen, was bei Überschreitung des Schwellenwerts der Fall ist, so wird die Geschwindigkeit im Ego-Fahrzeug auch nicht auf die Geschwindigkeit des vorausfahrenden Einspurfahrzeugs angepasst. In diesem Fall wird insbesondere im Fall einer höheren Zielgeschwindigkeit im Vergleich zur Geschwindigkeit der vorausfahrenden Einspurfahrzeuge ein Überholvorgang des Ego-Fahrzeugs bis zum Erreichen der Zielgeschwindigkeit durchgeführt.

Die Ermittlung des Seitenabstandes sowohl zwischen den zwei vorausfahrenden Einspurfahrzeugen als auch zwischen dem Ego-Fahrzeug und einem vorausfahrenden Einspurfahrzeug kann mithilfe einer Abstandserkennungseinheit durchgeführt werden, die Bestandteil einer Abstandstempomateinrichtung zur Durchführung des Verfahrens ist. Bei der Abstandserkennungseinheit handelt es sich insbesondere um eine radarbasierte Abstandserkennungseinheit, mit deren Hilfe sowohl der Längsabstand zwischen dem Ego-Fahrzeug und einem oder mehreren vorausfahrenden Fahrzeugen als auch der Seitenabstand zwischen zwei vorausfahrenden Fahrzeugen und zwischen dem Ego-Fahrzeug und einem vorausfahrenden Fahrzeug ermittelt werden kann. Die Auflösung der radarbasierten Abstandserkennungseinheit ist sowohl für die Ermittlung des Längsabstandes als auch des Querabstandes gut genug.

Das erfindungsgemäße Verfahren ist auf Situationen anwendbar, in denen mindestens zwei Einspurfahrzeuge vor dem Ego-Fahrzeug fahren. Es können gegebenenfalls mehr als zwei Einspurfahrzeuge sich vor dem Ego-Fahrzeug befinden. Mithilfe der Sensorik im Ego-Fahrzeug, die zu der Abstandserkennungseinheit gehört, wird insbesondere der Seitenabstand zwischen zwei unmittelbar vorausfahrenden Einspurfahrzeugen sowie zwischen dem Ego-Fahrzeug und dem nächsten vorausfahrenden Einspurfahrzeug ermittelt.

Gemäß einer vorteilhaften Ausführung wird der Schwellenwert, der dem Vergleich mit dem Seitenabstand zwischen dem Ego-Fahrzeug und dem vorausfahrenden Einspurfahrzeug zugrunde gelegt wird, auf einen größeren Wert als der Seitenabstand zwischen den zwei vorausfahrenden Einspurfahrzeugen gesetzt. Der Schwellenwert ist beispielsweise um mindestens 10 %, um mindestens 20 %, um mindestens 30 %, um mindestens 40 % oder um mindestens 50 % größer als der Seitenabstand zwischen den zwei vorausfahrenden Einspurfahrzeugen. Indem der Schwellenwert auf einen größeren Wert als der Seitenabstand gesetzt wird, besteht eine ausreichend große Toleranz für das Ego-Fahrzeug zum Beitreten zur Gruppenfahrt und Anhängen an das vorausfahrende Einspurfahrzeug.

Gemäß noch einer weiteren vorteilhaften Ausführung wird der Schwellenwert auf einen Maximalwert begrenzt. Dies stellt sicher, dass das Ego-Fahrzeug nur dann zur Gruppenfahrt gehörend erkannt wird, falls dieses sich innerhalb einer begrenzten seitlichen Distanz befindet. Es kann zwischen einer Gruppenfahrt und einem Überholvorgang unterschieden werden. Der Maximalwert wird beispielsweise auf die Fahrbahnbreite bzw. Fahrspurbreite der Straße gesetzt, auf der sich die vorausfahrenden Einspurfahrzeuge aktuell bewegen.

Gemäß noch einer weiteren vorteilhaften Ausführung werden die Verfahrensschritte in regelmäßigen Zeitabständen durchgeführt, so dass entsprechend regelmäßig der Schwellenwert angepasst und die Abfrage durchgeführt wird, ob das Ego-Fahrzeug dem vorausfahrenden Einspurfahrzeug folgen soll. Mit dieser Abfrage können zum einen Situationen erfasst werden, in denen sich die Gruppenfahrt auflöst, beispielsweise durch Ausscheren eines oder mehrerer vorausfahrender Einspurfahrzeuge. Möglich ist auch das Erkennen sonstiger sich ändernder Bedingungen, beispielsweise das Überschreiten des Schwellenwertes durch einen sich vergrößernden Seitenabstand zwischen dem Ego-Fahrzeug und dem vorausfahrenden Einspurfahrzeug.

Gemäß noch einer weiteren vorteilhaften Ausführung kann der Schwellenwert zusätzlich in Abhängigkeit weiterer Parameter oder Systemgrößen bestimmt werden, insbesondere in Abhängigkeit eines Straßenkennwerts wie beispielsweise dem Straßentyp oder Straßenbreite. So kann beispielsweise bei Fahrten auf Autobahnen der Schwellenwert auf einen höheren Maximalwert begrenzt werden als bei Fahrten auf kleineren Straßen, insbesondere in der Stadt. Die Erkennung des Straßentyps kann beispielsweise mithilfe eines Navigationssystems durchgeführt werden oder anhand eines Verkehrszeichenerkennungssystems. Die aktuelle Straßenbreite ergibt sich zum einen aus dem Straßentyp, zum andern kann ungeachtet der Erkennung des Straßentyps auch über eine Sensorik im Ego-Fahrzeug die Straßenbreite erkannt werden.

Die Verfahrensschritte laufen in einem Steuergerät ab, das Teil einer Abstandstempomateinrichtung im Ego-Fahrzeug oder unabhängig von der Abstandstempomateinrichtung im Ego-Fahrzeug verbaut ist. Mithilfe des Steuergeräts können insbesondere Sensorinformationen der Abstandserkennungseinheit ausgewertet werden und die Geschwindigkeit des Ego-Fahrzeugs selbsttätig eingestellt werden, indem der Antriebsmotor und gegebenenfalls ein Bremssystem im Ego-Fahrzeug angesteuert werden.

Die Erfindung bezieht sich außerdem auf eine Abstandstempomateinrichtung in einem Einspurfahrzeug mit einem vorbeschriebenen Steuergerät, einer Einrichtung zur selbsttätigen Geschwindigkeitseinstellung und einer Abstandserkennungseinheit zur Erkennung des Längsabstands zu einem vorausfahrenden Einspurfahrzeug und zur Erkennung des Seitenabstands zwischen zwei Einspurfahrzeugen, die beide vor dem Ego-Fahrzeug fahren oder des Seitenabstands zwischen dem Ego-Fahrzeug und einem vorausfahrenden Fahrzeug. Die Einrichtung zur selbsttätigen Geschwindigkeitseinstellung kann von dem Steuergerät selbst gebildet sein, in welchem Stellsignale zur Beaufschlagung des Antriebsmotors und des Bremssystems erzeugt werden.

Die Erfindung bezieht sich schließlich auf ein Einspurfahrzeug wie beispielsweise ein Motorrad oder ein Motorroller, das mit einer vorbeschriebenen Abstandstempomateinrichtung ausgestattet ist.

Die Erfindung bezieht sich außerdem auf ein Computerprogrammprodukt mit einem Programmcode, der dazu ausgelegt ist, die vorbeschriebenen Verfahrensschritte auszuführen. Das Computerprogrammprodukt läuft in einem vorbeschriebenen Steuergerät ab.

Weitere Vorteile und zweckmäßige Ausführungen sind den weiteren Ansprüchen, der Figurenbeschreibung und den Zeichnungen zu entnehmen. Es zeigen:
- Fig. 1a: eine Draufsicht auf drei Motorräder, die sich alle in Gruppenfahrt befinden,
- Fig. 1b: eine Draufsicht auf die drei Motorräder, wobei das dritte, nachfolgende Motorrad zum Überholen ansetzt,
- Fig 2a, 2b: weitere Draufsichten wie in Fig. 1a, 1b, jedoch mit einem größeren seitlichen Abstand zwischen den beiden vorausfahrenden Motorrädern,
- Fig. 3: ein Ablaufdiagramm mit Verfahrensschritten zur Einstellung einer Tempomatfunktion mit automatischer Abstandseinstellung in einem Einspurfahrzeug.

In den Figuren sind gleiche Bauteile mit gleichen Bezugszeichen versehen.

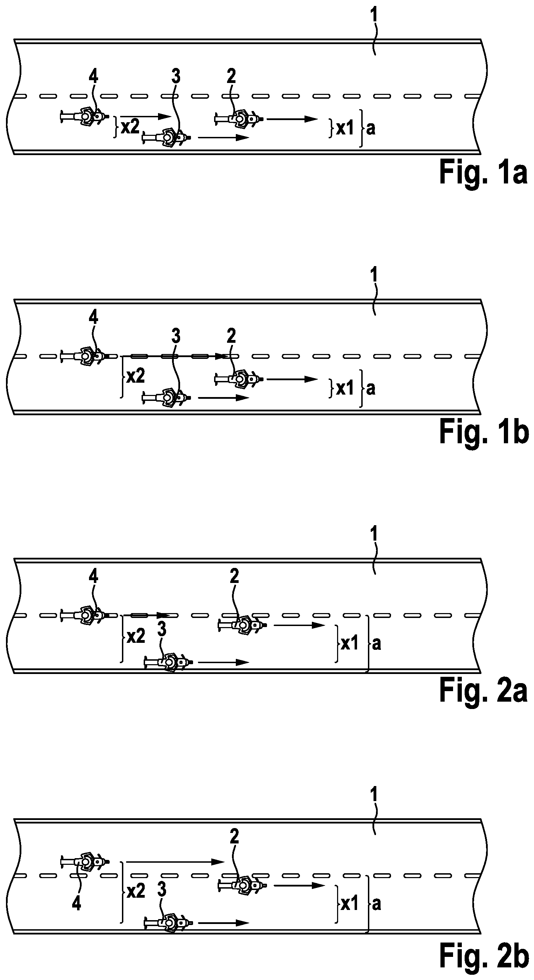

In Fig. 1a ist eine Draufsicht auf eine Gruppe von Einspurfahrzeugen dargestellt, die als Motorräder ausgeführt sind und auf einer Fahrspur einer Straße 1 entlangfahren. Die beiden vorausfahrenden Motorräder 2 und 3 fahren versetzt hintereinander und weisen zueinander einen Seitenabstand x₁ auf, bezogen auf die Längserstreckung der Straße 1 und die Fahrtrichtung der Motorräder. Das nachfolgende Motorrad 4 ist mit einer Tempomatfunktion mit automatischer Abstandseinstellung ausgestattet, die es erlaubt, gegebenenfalls einem der vorausfahrenden Motorräder 2, 3 zu folgen, insbesondere dem unmittelbar vorausfahrenden Motorrad 3. Hierbei wird der Längsabstand zwischen dem vorausfahrenden Motorrad 3 und dem nachfolgenden Einspurfahrzeug 4 (Ego-Fahrzeug) mithilfe einer Abstandserkennungseinheit ermittelt, die insbesondere ein Radarsystem umfasst. Die Abstandserkennungseinheit erlaubt es auch, sowohl den Seitenabstand x₁ zwischen den beiden vorausfahrenden Motorrädern 2 und 3 als auch den Seitenabstand x₂ zwischen dem unmittelbar vorausfahrenden Fahrzeug 3 und dem Ego-Fahrzeug 4 zu ermitteln. Bei aktivierter Tempomatfunktion mit vorgegebener Zielgeschwindigkeit, welche höher ist als die Geschwindigkeit der vorausfahrenden Motorräder 2, 3, kann das Ego-Fahrzeug 4 je nach Seitenabstand x₂ entweder einen Überholvorgang durchführen oder eine Gruppenfahrt mit den vorausfahrenden Motorrädern 2, 3 durchführen.

Die Erkennung, ob die beiden vorausfahrenden Motorräder 2, 3 gemeinsam mit dem Ego-Fahrzeug 4 eine zusammengehörende Gruppe, in der sich das Ego-Fahrzeug 4 bewegt, wird über einen Vergleich des aktuellen Seitenabstandes x2 zwischen dem Ego-Fahrzeug 4 und dem unmittelbar vorausfahrenden Motorrad 3 mit einem Schwellenwert a getroffen, der als Funktion des Seitenabstandes x₁ zwischen den beiden vorausfahrenden Motorrädern 2, 3 bestimmt wird. Hierbei ist es zweckmäßig, dass der Schwellenwert a größer ist als der Seitenabstand x₄ zwischen den Motorrädern 2, 3. Der Schwellenwert a kann beispielsweise um die Hälfte größer sein als der Seitenabstand x₁, jedoch begrenzt auf einen Maximalwert, beispielsweise auf die Fahrbahnbreite bzw. Fahrspur, auf der sich die Motorräder 2, 3, 4 auf der Straße 1 bewegen.

In Fig. 1a ist eine Fahrsituation dargestellt, in der der Seitenabstand x₂ zwischen dem Ego-Fahrzeug 4 und dem unmittelbar vorausfahrenden Motorrad 3 kleiner ist als der zuvor bestimmte Schwellenwert a, der als Funktion des Seitenabstandes x₁ zwischen den beiden vorausfahrenden Motorrädern 2, 3 bestimmt wird. In diesem Fall wird von einer Gruppenfahrt ausgegangen, woraufhin die Tempomatfunktion mit automatischer Abstandseinstellung in der Weise durchgeführt wird, dass das Ego-Fahrzeug 4 sich an das unmittelbar vorausfahrende Motorrad 3 als Zielfahrzeug anhängt und diesem folgt. Dementsprechend wird über die Tempomatfunktion die Geschwindigkeit des Ego-Fahrzeugs 4 durch Ansteuerung des Antriebsmotors im Ego-Fahrzeug 4 und gegebenenfalls des Bremssystems eingestellt.

In Fig. 1b ist eine Ausführungsvariante mit gleicher Ausgangssituation der vorausfahrenden Motorräder 2 und 3 dargestellt, die zueinander den Seitenstand x₁ aufweisen, aus dem der Schwellenwert a ermittelt wird. Im Unterschied zu Fig. 1a ist aber bei Fig. 1b der Seitenabstand x₂ zwischen dem Ego-Fahrzeug 4 und dem unmittelbar vorausfahrenden Motorrad 3 größer als der Schwellenwert a. In diesem Fall wird nicht von einer Gruppenfahrt ausgegangen, sondern von einem Überholvorgang, den das Ego-Fahrzeug 4 durchführt. Dementsprechend wird die aktuelle Geschwindigkeit des Ego-Fahrzeugs 4 nicht an die Geschwindigkeit des vorausfahrenden Motorrads3 angepasst, sondern das Ego-Fahrzeug 4 wird auf die eingestellte Zielgeschwindigkeit beschleunigt, die höher liegt als die Geschwindigkeit des vorausfahrenden Motorrads 3.

In Fig. 2a ist eine Fahrsituation mit drei Motorrädern 2, 3, 4 auf einer Straße dargestellt, die grundsätzlich mit der Fahrsituation gemäß Fig. 1a vergleichbar ist. Allerdings ist bei Fig. 2a der Seitenabstand x₁ zwischen den beiden vorausfahrenden Motorrädern 2, 3 größer, auch der Seitenabstand x₂ zwischen dem Ego-Fahrzeug 4 und dem unmittelbar vorausfahrenden Motorrad 3 ist größer. Aus dem Seitenabstand x₁ wird der Schwellenwert a berechnet, der etwa der Fahrbahnbreite entspricht. Da der Schwellenwert a größer ist als der Seitenabstand x₂ zwischen dem Ego-Fahrzeug 4 und dem unmittelbar vorausfahrenden Motorrad 3, wird von einer Gruppenfahrt ausgegangen und die Geschwindigkeit des Fahrzeugs 4 an die Geschwindigkeit des unmittelbar vorausfahrenden Motorrads 3 angepasst.

In Fig. 2b, in der die beiden vorausfahrenden Motorräder 2, 3 den gleichen Abstands x₁ wie in Fig. 2a aufweisen, ist der Seitenabstand x₂ des Ego-Fahrzeugs 4 zum unmittelbar vorausfahrenden Motorrad 3 größer als der Schwellenwert a, so dass nicht von einer Gruppenfahrt ausgegangen wird und sich das Ego-Fahrzeug 4 nicht an das vorausfahrende Motorrad 3 anhängt. Vielmehr wird von einem Überholvorgang ausgegangen, bei dem das Ego-Fahrzeug 4 auf die eingestellte Zielgeschwindigkeit beschleunigt.

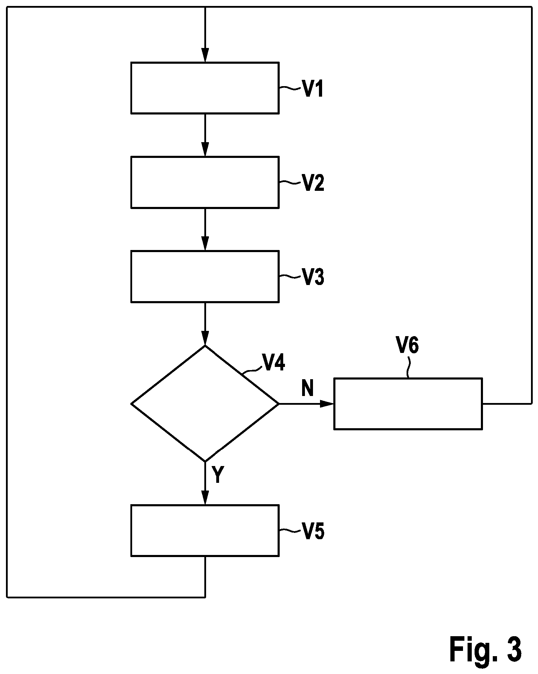

Fig. 3 zeigt ein Ablaufdiagramm zur Durchführung der Verfahrensschritte für die Einstellung der Tempomatfunktion. Dem Ablaufdiagramm liegt die Aktivierung der Tempomatfunktion im Ego-Fahrzeug zugrunde und die Einstellung einer Zielgeschwindigkeit in der Tempomatfunktion.

Zunächst wird in einem ersten Verfahrensschritt V1 der Seitenabstand x₁, zwischen zwei vorausfahrenden Motorrädern bestimmt. Anschließend erfolgt im nächsten Verfahrensschritt V2 die Ermittlung eines Schwellenwertes a, der als Funktion des Seitenabstandes x₁ bestimmt wird. Hierbei ist es zweckmäßig, den Schwellenwert a auf einen größeren Wert als den Seitenabstand x₁ zu setzen, jedoch begrenzt auf einen Maximalwert, der insbesondere bei der halben Fahrspurbreite liegt. Gegebenenfalls können bei der Bestimmung des Schwellenwerts a weitere Größen berücksichtigt werden, zum Beispiel der Straßentyp wie Autobahn, Landstraße oder Ortsstraße.

Im folgenden Verfahrensschritt V3 wird der aktuelle Seitenabstand x₂ zwischen dem Ego-Fahrzeug und dem unmittelbar vorausfahrenden Motorrad bestimmt. Im Verfahrensschritt V4 erfolgt anschließend die Abfrage, ob der Seitenabstand x₂ zwischen dem Ego-Fahrzeug und dem unmittelbar vorausfahrenden Motorrad kleiner oder gleich dem Schwellenwert a ist. Ist dies der Fall, wird der Ja-Verzweigung ("Y") folgend zum nächsten Verfahrensschritt V5 vorgerückt, gemäß dem eine Gruppenfahrt der Motorräder vorliegt und das Ego-Fahrzeug dem unmittelbar vorausfahrenden Motorrad folgt.

Ergibt dagegen die Abfrage im Verfahrensschritt V4, dass der Seitenabstand x₂ größer ist als der Schwellenwert a, so kann nicht von einer Gruppenfahrt ausgegangen werden. In diesem Fall wird der Nein-Verzweigung ("N") folgend zum Verfahrensschritt V6 vorgerückt, gemäß dem von einem Überholvorgang des Ego-Fahrzeugs ausgegangen wird und die in der Tempomatfunktion eingestellte Zielgeschwindigkeit im Ego-Fahrzeug erreicht wird.

Sowohl im Anschluss an den Verfahrensschritt V5 als auch im Anschluss an den Verfahrensschritt V6 wird wieder zum Verfahrensschritt V1 zurückgekehrt und das gesamte Verfahren in zyklischen Abständen erneut durchlaufen.

Die verschiedenen Verfahrensschritte laufen in einem Steuergerät ab, das Teil einer Abstandstempomateinrichtung im Einspurfahrzeug sein kann. Diese umfasst außerdem eine Abstandserkennungseinheit zur Erkennung des Längsabstandes zu einem vorausfahrenden Fahrzeug und zur Erkennung des Seitenabstands zwischen zwei Einspurfahrzeugen. Über das Steuergerät können nach Auswertung aller Informationen Stellsignale zur Einstellung des Antriebsmotors und gegebenenfalls des Bremssystems erzeugt werden.

## Patentansprüche

1. Verfahren zur Einstellung einer Tempomatfunktion mit automatischer Abstandseinstellung in einem Einspurfahrzeug (2, 3), mit folgenden Verfahrensschritten:
a) Ermitteln des Seitenabstandes (x₁) zwischen zwei vorausfahrenden Einspurfahrzeugen (2, 3),
b) Bestimmen eines Schwellenwerts (a) als Funktion des Seitenabstandes (x₁) zwischen den zwei vorausfahrenden Einspurfahrzeugen (2, 3),
c) Ermitteln des Seitenabstandes (x₂) zwischen dem eigenen Einspurfahrzeug (4) und einem vorausfahrenden Einspurfahrzeug (3),
d) Verwenden des vorausfahrenden Einspurfahrzeugs (3) als zu folgendem Zielfahrzeug für die Tempomatfunktion für den Fall, dass der Seitenabstand (x₂) zwischen dem eigenen Einspurfahrzeug (4) und dem vorausfahrenden Einspurfahrzeug (3) kleiner oder gleich dem Schwellenwert (a) ist.

2. Verfahren nach Anspruch 1, **dadurch gekennzeichnet, dass** der Schwellenwert (a) auf einen größeren Wert als der Seitenabstand (x₁) zwischen den zwei vorausfahrenden Einspurfahrzeugen (2, 3) gesetzt wird.

3. Verfahren nach Anspruch 1 oder 2, **dadurch gekennzeichnet, dass** der Schwellenwert (a) auf einen Maximalwert begrenzt wird, beispielsweise auf die Fahrbahnbreite der Straße (1), auf der sich die Einspurfahrzeuge (2, 3, 4) aktuell bewegen.

4. Verfahren nach einem der Ansprüche 1 bis 3, **gekennzeichnet durch** eine regelmäßige Durchführung der Verfahrensschritte mit einer Ermittlung und gegebenenfalls Anpassung des Schwellenwerts (a), des Seitenabstandes (x₂) zwischen dem eigenen Einspurfahrzeug (4) und einem vorausfahrenden Einspurfahrzeug (3) und des Seitenabstandes (x₁) zwischen zwei vorausfahrenden Einspurfahrzeugen (2, 3).

5. Verfahren nach einem der Ansprüche 1 bis 4, **dadurch gekennzeichnet, dass** in der Tempomatfunktion eine Zielgeschwindigkeit vorgegeben wird, auf die für den Fall beschleunigt wird, dass der Seitenabstand (x₂) zwischen dem eigenen Einspurfahrzeug (4) und dem vorausfahrenden Einspurfahrzeug (3) größer als der Schwellenwert (a) ist.

6. Verfahren nach einem der Ansprüche 1 bis 5, **dadurch gekennzeichnet, dass** der Schwellenwert (a) zusätzlich in Abhängigkeit eines Straßenkennwerts ermittelt wird, beispielsweise in Abhängigkeit des Straßentyps oder der Straßenbreite.

7. Steuergerät zur Durchführung des Verfahrens nach einem der Ansprüche 1 bis 6.

8. Abstandstempomateinrichtung in einem Einspurfahrzeug (2, 3, 4), mit einem Steuergerät nach Anspruch 7, mit einer Einrichtung zur selbsttätigen Geschwindigkeitseinstellung und mit einer Abstandserkennungseinheit zur Erkennung des Längsabstands zu einem vorausfahrenden Einspurfahrzeug (2, 3, 4) und zur Erkennung des Seitenabstands zwischen zwei Einspurfahrzeugen (2, 3).

9. Einspurfahrzeug, insbesondere Motorrad, mit einer Abstandstempomateinrichtung nach Anspruch 8.

10. Computerprogrammprodukt mit einem Programmcode, der dazu ausgelegt ist, Schritte des Verfahrens nach einem der Ansprüche 1 bis 6 auszuführen, wenn das Computerprogrammprodukt in einem Steuergerät gemäß Anspruch 7 abläuft.

## Claims

1. Method for setting a cruise control function with automatic distance adjustment in a single-track vehicle (2, 3), having the following method steps:
a) determining the lateral distance (x₁) between two single-track vehicles (2, 3) ahead;
b) identifying a threshold value (a) as a function of the lateral distance (x₁) between the two single-track vehicles (2, 3) ahead;
c) determining the lateral distance (X₂) between the ego single-track vehicle (4) and a single-track vehicle (3) ahead;
d) using the single-track vehicle (3) ahead as the target vehicle to be followed for the cruise control function if the lateral distance (x₂) between the ego single-track vehicle (4) and the single-track vehicle (3) ahead is less than or equal to the threshold value (a).

2. Method according to Claim 1, **characterized in that** the threshold value (a) is set to a greater value than the lateral distance (x₁) between the two single-track vehicles (2, 3) ahead.

3. Method according to Claim 1 or 2, **characterized in that** the threshold value (a) is limited to a maximum value, for example to the road width of the road (1) on which the single-track vehicles (2, 3, 4) are currently moving.

4. Method according to one of Claims 1 to 3, **characterized by** regular performance of the method steps comprising determination and, if necessary, adjustment of the threshold value (a), the lateral distance (X₂) between the ego single-track vehicle (4) and a single-track vehicle (3) ahead and the lateral distance (x₁) between two single-track vehicles (2, 3) ahead.

5. Method according to one of Claims 1 to 4, **characterized in that** a target speed is specified in the cruise control function, to which the vehicle is accelerated if the lateral distance (x₂) between the ego single-track vehicle (4) and the single-track vehicle (3) ahead is greater than the threshold value (a).

6. Method according to one of Claims 1 to 5, **characterized in that** the threshold value (a) is additionally determined on the basis of a road characteristic, for example on the basis of the road type or the road width.

7. Control unit for carrying out the method according to one of Claims 1 to 6.

8. Adaptive cruise control device in a single-track vehicle (2, 3, 4), comprising a control unit according to Claim 7, comprising a device for automatic speed adjustment and comprising a distance detection unit for detecting the longitudinal distance from a single-track vehicle (2, 3, 4) ahead and for detecting the lateral distance between two single-track vehicles (2, 3).

9. Single-track vehicle, in particular motorcycle, comprising an adaptive cruise control device according to Claim 8.

10. Computer program product comprising program code designed to carry out steps of the method according to one of Claims 1 to 6 when the computer program product runs in a control unit according to Claim 7.

## Revendications

1. Procédé permettant de régler une fonction de régulation de vitesse, comprenant un réglage de distance automatique dans un véhicule à voie unique (2, 3), comprenant les étapes de procédé suivantes consistant à :
a) établir la distance latérale (x₁) entre deux véhicules à voie unique (2, 3) qui précèdent,
b) déterminer une valeur seuil (a) comme une fonction de la distance latérale (x₁) entre les deux véhicules à voie unique (2, 3) qui précèdent,
c) établir la distance latérale (X₂) entre le véhicule à voie unique propre (4) et un véhicule à voie unique (3) qui précède,
d) utiliser le véhicule à voie unique (3) qui précède comme le véhicule cible à suivre pour la fonction de régulation de vitesse au cas où la distance latérale (x₂) entre le véhicule à voie unique propre (4) et le véhicule à voie unique (3) qui précède serait inférieure ou égale à la valeur seuil (a).

2. Procédé selon la revendication 1, **caractérisé en ce que** la valeur seuil (a) est mise sur une plus grande valeur que la distance latérale (x₁) entre les deux véhicules à voie unique (2, 3) qui précèdent.

3. Procédé selon la revendication 1 ou 2, **caractérisé en ce que** la valeur seuil (a) est limitée à une valeur maximale, par exemple à la largeur de chaussée de la route (1) sur laquelle les véhicules à voie unique (2, 3, 4) se déplacent actuellement.

4. Procédé selon l'une quelconque des revendications 1 à 3, **caractérisé en ce que** les étapes de procédé sont exécutées régulièrement tout en établissant et le cas échéant adaptant la valeur seuil (a), la distance latérale (X₂) entre le véhicule à voie unique propre (4) et un véhicule à voie unique (3) qui précède et la distance latérale (x₁) entre deux véhicules à voie unique (2, 3) qui précèdent.

5. Procédé selon l'une quelconque des revendications 1 à 4, **caractérisé en ce que** dans la fonction de régulation de vitesse, une vitesse cible est prédéfinie jusqu'à laquelle on accélère au cas où la distance latérale (x₂) entre le véhicule à voie unique propre (4) et le véhicule à voie unique (3) qui précède serait plus grande que la valeur seuil (a).

6. Procédé selon l'une quelconque des revendications 1 à 5, **caractérisé en ce que** la valeur seuil (a) est de plus établie en fonction d'une valeur caractéristique de route, par exemple en fonction du type de route ou de largeur de route.

7. Appareil de commande permettant d'exécuter le procédé selon l'une quelconque des revendications 1 à 6.

8. Dispositif de régulation de vitesse et de distance dans un véhicule à voie unique (2, 3, 4), pourvu d'un appareil de commande selon la revendication 7, comprenant un dispositif pour le réglage autonome de la vitesse et un dispositif de reconnaissance de distance pour reconnaître la distance longitudinale par rapport à un véhicule à voie unique (2, 3, 4) qui précède et pour reconnaître la distance latérale entre deux véhicules à voie unique (2, 3).

9. Véhicule à voie unique, en particulier motocyclette, comprenant un dispositif de régulation de vitesse et de distance selon la revendication 8.

10. Produit de programme informatique comprenant du code de programme qui est conçu pour exécuter des étapes du procédé selon l'une quelconque des revendications 1 à 6 lorsque le produit de programme informatique est exécuté sur un appareil de commande selon la revendication 7.
